# DEMANDE DE BREVET EUROPEEN

(11) **EP 2 696 320 A1**
(43) Date de publication de la demande: **12.02.2014**
(21) Numéro de dépôt: 13178443.1
(22) Date de dépôt: 30.07.2013
(51) Int. Cl.: G06Q 20/38, G06Q 20/32, G07F 7/08

(54) **Procédé de vérification d'authenticité, serveur, système et programme d'ordinateur correspondants**

(30) Priorité: 09.08.2012 FR 1257744
(71) Demandeur: Compagnie Industrielle et Financiere d'Ingenierie Ingenico, 75015 Paris (FR)
(72) Inventeur: Rotsaert, Christopher, 59290 WASQUEHAL (FR)
(74) Mandataire: Le Noane, Karine

(57) **Abrégé**

L'invention concerne un procédé de vérification de l'authenticité d'un périphérique d'acquisition de données, à utiliser, ledit périphérique d'acquisition de données à utiliser comportant au moins un identifiant.

Selon l'invention, un tel procédé comprend :
- une étape de réception, par un serveur d'authentification, dudit identifiant ;
- une étape de vérification, par ledit serveur d'authentification, d'une association dudit identifiant avec un périphérique authentique référencé, délivrant une décision d'identification ;
- une étape de transmission, par ledit serveur, de ladite décision d'identification.

## Description

### 1. DOMAINE DE L'INVENTION

Le domaine de l'invention est celui des terminaux de paiement électroniques, et plus précisément des terminaux de paiement portables, ou mobiles, et notamment des accessoires de paiement tels que des «Périphériques d'Acquisition Détachables (dits «PAD», ou « reader roam data » selon la terminologie anglaise), munis de moyens de lecture d'une carte électronique, comme une carte magnétique, à contact ou sans contact, et en particulier d'une carte de paiement électronique.

Une simple connexion d'un tel périphérique à un téléphone muni de fonctionnalités de communication par internet, par exemple via la prise audio du téléphone, permet en effet de disposer ensuite d'un terminal apte à effectuer des paiements. Par exemple, les données lues sur une carte magnétique peuvent être transmises, par le périphérique, sous forme de codes DTMF vers le téléphone, qui peut ensuite les transmettre vers une application de paiement en ligne.

### 2. ARRIÈRE-PLAN TECHNOLOGIQUE

La facilité d'installation des PAD leur permet d'être adaptés à de nouvelles utilisations, notamment dans des environnements divers, par exemple des environnements sans infrastructure de communication. Des paiements par PAD peuvent ainsi être effectués grâce au « smartphone » d'un particulier ou d'un commerçant travaillant en extérieur, par exemple un artisan travaillant au domicile de particuliers ou se déplaçant sur des foires ou marchés.

Ces nouvelles possibilités d'utilisation, notamment par des commerçants nomades, inconnus de leurs clients, soulèvent une nouvelle problématique de confiance pour leurs clients.

De plus, les fonctionnalités matérielles de ces terminaux sont relativement basiques et peuvent être implémentées à faible coût. De ce fait, de tels terminaux sont donc faciles à réaliser.

Ceci explique le succès de tels terminaux mais également le développement de solutions frauduleuses, visant par exemple à obtenir des données bancaires confidentielles des clients ou le débit de sommes indues.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique qui permette de rassurer un utilisateur d'un PAD souhaitant effectuer un paiement depuis ce PAD.

Au moins un mode de réalisation de l'invention a également pour objectif de fournir une telle technique qui soit facile à mettre en oeuvre pour un utilisateur, sans nécessiter de compétence technique particulière.

Un autre objectif d'au moins un mode de réalisation de l'invention est de fournir une telle technique qui soit utilisable depuis un terminal de communication standard du marché.

### 4. EXPOSÉ DE L'INVENTION

Dans un mode de réalisation particulier de l'invention, il est proposé un procédé de vérification de l'authenticité d'un périphérique d'acquisition de données, à utiliser, ledit périphérique d'acquisition de données à utiliser comportant au moins un identifiant.

Selon l'invention, un tel procédé comprend :
- une étape de réception, par un serveur d'authentification, dudit identifiant;
- une étape de vérification, par ledit serveur d'authentification, d'une association dudit identifiant avec un périphérique authentique référencé, délivrant une décision d'identification;
- une étape de transmission, par ledit serveur, de ladite décision d'identification.

Ainsi, la solution de l'invention permet à un utilisateur amené à utiliser un PAD, pour la manipulation de données sensibles (par exemple des donnés bancaires), de s'assurer, avant l'utilisation de ce PAD, de son caractère inoffensif.

Selon une caractéristique particulière de l'invention, le procédé comprend en outre une étape d'obtention, par ledit serveur d'authentification, d'au moins une information complémentaire issue dudit périphérique d'acquisition de données à utiliser, ladite information complémentaire étant représentative d'une absence d'altération et/ou d'effraction dudit périphérique d'acquisition de données à utiliser.

L'invention permet ainsi de tenir compte, lors de la réponse du serveur, non seulement de l'authenticité du périphérique mais, également, lorsque le PAD est muni de moyens de sécurisation physique, de la détection d'une possible altération ou effraction du périphérique, pour exemple pour obtenir frauduleusement des données saisies ou lues par ce périphérique.

Selon une caractéristique particulière de l'invention, le procédé comprend une étape de contrôle de l'authenticité dudit périphérique d'acquisition de données à utiliser, délivrant une décision d'authentification dudit périphérique d'acquisition de données à utiliser.

L'invention permet ainsi à l'utilisateur de détecter un PAD contrefait réutilisant frauduleusement un identifiant correspondant à un PAD authentique.

Selon une caractéristique particulière de l'invention, le procédé comprend en outre une étape d'acquisition, préalable à ladite étape de transmission, permettant d'acquérir au moins ledit identifiant.

Un tel mode de réalisation offre ainsi des avantages en terme de simplicité d'utilisation et de fiabilité, puisqu'il permet d'éviter une saisie manuelle par l'utilisateur. Il permet également une vérification plus rapide et plus discrète par l'utilisateur. En effet, ce dernier peut souhaiter vérifier l'authenticité du PAD qui lui est présenté tout en étant gêné, vis-à-vis du tiers (un commerçant par exemple), d'effectuer cette vérification. Certains modes de réalisation, dans lesquels la vérification est effectuée automatiquement à l'initiative du terminal de l'utilisateur, peuvent offrir une sécurité accrue à l'utilisateur tout en lui permettant de se sentir libéré de la responsabilité de cette vérification vis-à-vis du tiers.

Selon un mode de réalisation particulier de l'invention, ladite étape d'acquisition comprend une sous-étape appartenant au groupe comprenant :
- une lecture d'un code barre et/ou d'un flash code porté par ledit périphérique d'acquisition de données à utiliser et comprenant ledit identifiant ;
- une réception d'un flux de données par des moyens de communication sans fil, ledit flux de données comprenant ledit identifiant ;
- une lecture d'une étiquette RFID portée par ledit périphérique d'acquisition de données à utiliser et comprenant ledit identifiant;
- une reconnaissance optique de caractères portés par ledit périphérique d'acquisition de données à utiliser et comprenant ledit identifiant.

Selon une caractéristique particulière de l'invention, ladite étape d'acquisition fournit en outre une information de désignation dudit serveur d'authentification.

Un tel mode de réalisation offre l'avantage de permettre d'engager une vérification auprès d'un serveur adéquat pour le PAD à authentifier.

Selon une caractéristique particulière de l'invention, ladite étape de vérification comporte une sous-étape d'obtention d'une information de désignation d'un terminal de communication associé audit périphérique authentique référencé.

Ainsi, dans certains modes de réalisation, la solution de l'invention offre au serveur un moyen de dialogue, par le biais du terminal désigné par l'information de désignation, avec le PAD authentique référencé.

De plus, la définition d'un terminal marchand de référence pour le PAD authentique référencé offre également des moyens supplémentaires de vérification de l'authenticité du PAD à utiliser. Elle permet également de vérifier la fiabilité du terminal tiers auquel est connecté le PAD.

Selon une caractéristique particulière de l'invention, ladite étape de transmission de ladite décision d'identification comprend, préalablement à ladite étape de contrôle de l'authenticité dudit périphérique d'acquisition de données à utiliser, au moins une sous-étape appartenant au groupe comprenant :
- la transmission d'au moins une donnée à présenter sur ledit périphérique authentique référencé associé audit identifiant;
- la transmission d'au moins une donnée à présenter sur au moins un terminal de communication ;
- le lancement d'une séquence de test depuis ledit périphérique authentique référencé associé audit identifiant;
- une combinaison de plusieurs de ces sous-étapes.

Selon un mode de réalisation particulier de l'invention, ledit identifiant est transmis depuis un terminal de communication et ladite décision d'identification est reçue par ledit terminal de communication.

Ainsi, l'invention permet à un utilisateur de tester un PAD via le terminal d'un utilisateur, indépendamment du terminal du marchant, de façon notamment à se prémunir d'un fonctionnement non attendu d'un terminal frauduleux. Un tel mode de réalisation offre également des avantages en terme de discrétion pour le client, vis-à-vis du tiers.

Selon un autre aspect, l'invention concerne un produit programme d'ordinateur comprenant des instructions de code de programme pour la mise en oeuvre du procédé précité (dans l'un quelconque de ses différents modes de réalisation), lorsque ledit programme est exécuté sur un ordinateur.

Selon encore un autre aspect, l'invention concerne un serveur d'authentification d'un périphérique d'acquisition de données, à utiliser, ledit périphérique comportant au moins un identifiant.

Selon l'invention, un tel serveur comprend :
- des moyens de réception dudit identifiant ;
- des moyens de vérification d'une association dudit identifiant avec un périphérique authentique référencé, délivrant une décision d'identification ;
- des moyens de transmission de ladite décision d'identification.

Avantageusement, le serveur d'authentification selon l'invention comprend des moyens de mise en oeuvre des étapes qu'il effectue dans le procédé de vérification d'authenticité tel que décrit précédemment, dans l'un quelconque de ses différents modes de réalisation.

Selon encore un autre aspect, l'invention concerne aussi un système de vérification de l'authenticité d'un périphérique d'acquisition de données, à utiliser, connecté à un premier terminal de communication, ledit périphérique comportant au moins un identifiant, et ledit système comprenant au moins un second terminal de communication, et un serveur d'authentification d'un périphérique selon l'invention.

Selon l'invention, ledit système comprend :
- des moyens de transmission dudit identifiant depuis ledit second terminal de communication vers ledit serveur ;
- des moyens de test d'une acquisition d'une séquence particulière de données depuis le périphérique authentifié utilisé par ledit premier terminal;
- des moyens de réception d'une décision d'identification dudit serveur, par ledit second terminal.

La solution de l'invention permet ainsi une vérification de l'ensemble des équipements impliqués dans une transaction bancaire avant que celle-ci soit effectuée.

Avantageusement, le système de vérification d'authenticité selon l'invention comprend des moyens de mise en oeuvre des étapes qu'il effectue dans le procédé de vérification d'authenticité tel que décrit précédemment, dans l'un quelconque de ses différents modes de réalisation.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente le principe général de l'invention ;
- la figure 2 présente les étapes du procédé de l'invention selon un premier mode de réalisation particulier ;
- la figure 3 présente les étapes du procédé de l'invention selon un second mode de réalisation particulier ;
- la figure 4 présente la structure d'un serveur d'application selon un mode de réalisation particulier de l'invention.

Sur toutes les figures du présent document, les éléments et étapes identiques sont désignés par une même référence numérique.

### 6. DESCRIPTION DÉTAILLÉE

### 6.1 Principe général

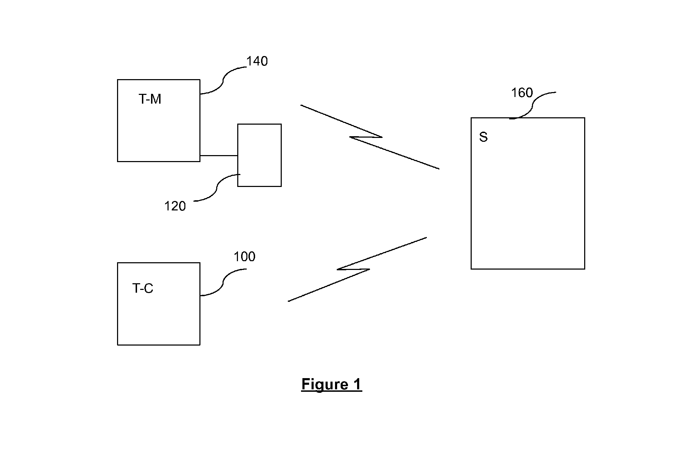

On présente, en liaison avec la figure 1, le principe général de l'invention. Celui-ci consiste à permettre à un utilisateur (ou « client ») d'un terminal 100 muni de fonctionnalités de communication de type internet, par exemple un « smartphone », de pouvoir s'assurer de l'authenticité d'un PAD 120, avant d'effectuer un règlement par le biais de ce PAD, par exemple avant d'insérer sa carte de crédit dans ce PAD 120.

La solution de l'invention propose à l'utilisateur d'effectuer une vérification de l'authenticité du PAD 120, auprès d'un serveur d'authentification 160 et de recevoir en retour des informations traduisant le résultat de cette vérification et lui permettant éventuellement en sus de l'assurer que le PAD qu'il va utiliser est bien celui dont l'authenticité a été vérifiée.

Dans certains modes de réalisation, comme illustré en figure 1, il peut s'agir d'un PAD qui sera utilisé depuis le terminal 140 d'un tiers. Dans d'autres modes de réalisation, il peut s'agir d'un PAD appartenant à un tiers, qui sera utilisé depuis le propre terminal de l'utilisateur, par exemple parce que le tiers n'a pas de terminal disponible.

La vérification de l'authentification du PAD peut notamment être initiée depuis le propre terminal 100 de l'utilisateur. Un tel mode de réalisation offre des garanties supplémentaires en terme de sécurité à l'utilisateur, puisque la vérification est initiée depuis un équipement dont il n'a aucun doute sur la fiabilité.

Selon les modes de réalisation de l'invention, le procédé peut être mis en oeuvre manuellement par l'utilisateur, en se connectant à une application située sur un serveur distant accessible grâce à une connexion internet par exemple, ou automatiquement, par le biais d'une application téléchargée sur le téléphone de l'utilisateur, se chargeant de dialoguer avec une application située sur un serveur distant.

Le procédé peut aussi être mis en oeuvre grâce à une application téléchargée sur le terminal du tiers.

### 6.2 Présentation d'un premier mode particulier de réalisation de l'invention

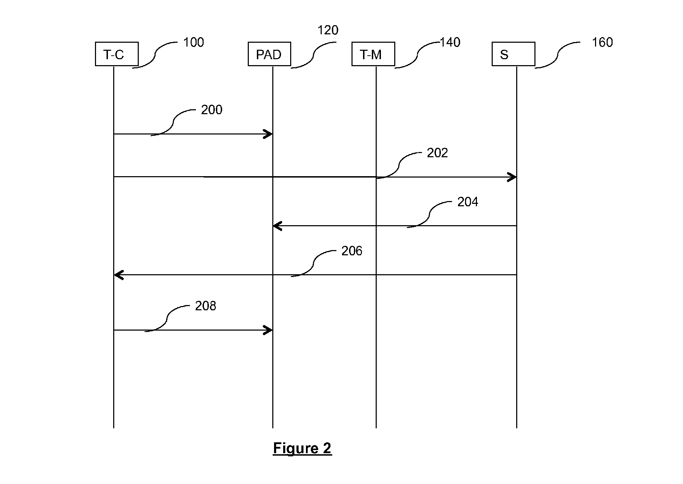

On présente, en liaison avec les figures 1 et 2, les étapes du procédé de l'invention selon un premier mode de réalisation particulier.

Dans ce mode de réalisation, le procédé d'authentification est initié depuis le terminal 100 d'un client (T-C), souhaitant effectuer un paiement depuis un PAD 120, appartenant à un commerçant.

Dans le mode de réalisation présenté, l'utilisateur dispose, pour vérifier l'authenticité du PAD 120 du commerçant, de son propre téléphone 100, de type « smartphone », comprenant des moyens de communication avec le PAD 120. Il peut par exemple s'agir d'un port USB ou encore de moyens de communication type « Bluetooth » ou de la prise audio du téléphone.

Dans le mode de réalisation illustré en figure 2, le procédé comprend tout d'abord une étape 200 d'acquisition, permettant notamment l'acquisition d'un identifiant que comprend le PAD 120.

Cette étape d'acquisition 200 peut être mise en oeuvre par le terminal 100, à l'initiative du terminal lui-même (par exemple suite à une interrogation systématique des PAD à proximité) ou de l'utilisateur (pour minimiser la consommation de la batterie de son terminal par exemple).

L'étape d'acquisition 200 peut notamment utiliser des moyens de communication connectant le téléphone et le PAD 120 pour acquérir cet identifiant (par exemple une prise audio).

Le terminal 100 peut également être muni d'un lecteur RFID permettant la lecture d'une étiquette RFID présente sur un PAD et comportant l'identifiant d'un PAD, le lecteur étant activé dès que le terminal 100 se trouve au voisinage d'un PAD.

L'étape acquisition 200 peut aussi mettre en oeuvre des moyens d'acquisition d'images, tel qu'un scanner ou qu'un appareil photo numérique, activés par l'utilisateur, par exemple par le biais d'une application spécifique s'exécutant sur son téléphone, et permettant d'acquérir un code barre ou un code 2D (ou flash code) présent sur le PAD 120 et comportant un identifiant du périphérique.

Dans d'autres modes de réalisation, l'identifiant est saisi manuellement par le client sur le terminal 100, par exemple par la saisie d'un numéro de série présent sur le PAD.

Dans certains modes de réalisation, l'étape d'acquisition 200 peut également permettre l'obtention d'une information d'adressage d'un serveur d'authentification à qui soumettre l'identifiant acquis. Cette information d'adressage peut être acquise en même temps que l'identifiant du PAD. Par exemple, elle peut être contenue dans le même flash code que l'identifiant. L'acquisition de l'information d'adressage et l'acquisition de l'identifiant peuvent aussi être réalisées séparément.

Le procédé comprend de plus une étape 202 de réception de l'identifiant par un serveur d'authentification 160. Dans certains modes de réalisation de l'invention, il peut s'agir d'un serveur unique, dont l'adresse est préenregistrée sur le téléphone de l'utilisateur, par exemple lors du téléchargement sur le téléphone d'une application dédiée à l'authentification de PAD. Le même serveur est alors sollicité quelque soit le PAD présent. Dans d'autres modes de réalisation de l'invention, il peut s'agir d'une adresse obtenue du PAD 120 lui-même, comme présenté ci-dessus, qui peut différer selon les PAD à vérifier. Il peut par exemple s'agir d'une adresse électronique du fabricant du PAD 120.

Le procédé comprend ensuite une étape de vérification, par le serveur, de l'association de l'identifiant reçu à un PAD authentique référencé. Il peut s'agir par exemple de l'appartenance de l'identifiant à une liste de numéros de séries et/ou de numéros de lots de fabrication maintenue par un fabricant de PAD et accessible depuis une base de données.

L'étape de vérification peut comprendre en particulier une étape 204 de dialogue bidirectionnel avec le PAD à utiliser, mise en oeuvre par le biais du téléphone 100 du client, comme présenté en figure 2, ou par le biais du téléphone 140 du tiers. Ce dialogue peut être basé par exemple sur un échange de clés uniques et/ou dynamiques ou de certificats numériques avec le PAD afin de permettre son authentification.

Dans certains modes de réalisation particuliers, par exemple lorsque le PAD à authentifier comprend des moyens de sécurisation physique (par exemple des moyens de détection d'effraction et/ou d'effacement des secrets), cette étape peut comprendre également une vérification de l'absence d'altération ou d'effraction du PAD 120.

Enfin de protéger le téléphone de l'utilisateur des risques d'un virus informatique, et d'éviter le téléchargement d'une application spécifique, cet échange peut, dans certains modes de réalisation, être effectué uniquement par l'intermédiaire du browser du téléphone 100 de l'utilisateur. Un tel mode de réalisation offre de plus l'avantage de ne nécessiter aucune action de l'utilisateur, les vérifications pouvant être réalisées automatiquement entre le serveur et le terminal 100 auquel est connecté le PAD.

L'étape de vérification peut également comprendre une étape d'obtention d'une information de désignation d'un terminal associé au PAD authentique référencé. Cette information de désignation permet ainsi d'attacher un PAD au terminal auquel il est habituellement connecté (ce terminal est appelé « terminal marchand référencé » par la suite dans un souci de simplification). Une telle information de désignation peut par exemple être stockée, de façon centralisée, sur une base de données référençant également les PAD authentiques.

Un tel mode de réalisation permet au serveur de dialoguer avec le PAD authentique référencé par le biais du terminal marchand référencé. Il lui permet également de disposer d'un terminal marchand « sûr » pour la transmission de données à présenter (voir l'étape 206 notamment).

L'étape de vérification aboutit à une décision d'identification du PAD 120 à utiliser, traduisant sa fiabilité.

Le procédé de l'invention comprend ensuite une étape 206 de transmission par le serveur, par exemple vers le téléphone 100 de l'utilisateur, vers le terminal 140 du tiers et/ou vers le terminal marchand référencé, de cette décision.

L'étape de transmission de la décision du serveur peut en particulier comprendre au moins une sous-étape de transmission d'une donnée à présenter sur le terminal de communication du client, sur le terminal marchand référencé et/ou sur le périphérique à utiliser, par exemple une indication visuelle, sonore et/ou textuelle. Cette indication peut notamment dépendre de la décision d'identification.

Ainsi, l'étape 206 peut par exemple comprendre la génération d'un message vocal ou textuel sur le téléphone 100, avertissant le client d'un risque potentiel et/ou au contraire lui indiquant que le PAD authentifié est considéré comme sûr.

Dans certains modes de réalisation, notamment dans le mode de réalisation illustré en figure 2, le procédé peut également comprendre une étape 208 de contrôle de l'authenticité du PAD à utiliser.

Cette étape peut être notamment précédé, lors de l'étape de transmission, par une étape de fourniture par le serveur de moyens permettant à l'utilisateur de s'assurer que le PAD authentique associé à l'identifiant que comporte le PAD à utilisé est bien celui qui lui est présenté par le commerçant.

Cette étape de fourniture peut notamment comprendre la transmission de données à présenter sur le PAD, sur le terminal 100 du client, sur le terminal 140 du tiers et/ou sur le terminal marchand référencé.

Par exemple, elle peut comprendre une sous-étape de transmission, par le serveur, de données commandant l'illumination de LEDs présentes sur le PAD, dont la couleur (rouge ou verte par exemple) et/ou le rythme d'animation indiqueront la décision d'identification du PAD (et éventuellement la détection d'un risque d'effraction du PAD) et permettront en sus à l'utilisateur de contrôler visuellement, par voie de conséquence, que le PAD utilisé est bien le PAD authentique référencé.

Dans d'autres modes de réalisation, éventuellement complémentaires, adaptés également à des PAD intégrant au moins une LED, l'étape de contrôle 208 peut être mise en oeuvre par une séquence particulière de clignotement de LEDS définie dynamiquement par le serveur (par exemple une séquence aléatoire) et présentée à l'avance à l'utilisateur du téléphone 100, lors de l'étape 206, par exemple grâce à une sous-étape de transmission d'un SMS.

Dans d'autres modes de réalisation, l'étape 206 de transmission de la décision du serveur d'authentification peut comprendre une sous-étape de transmission d'un code à présenter sur le téléphone 100 du client et une sous-étape de transmission de ce même code au terminal marchand référencé et l'étape de contrôle peut comprendre la lecture et la comparaison de ces deux codes. L'étape de contrôle permet donc à l'utilisateur de s'assurer que le terminal du tiers est bien le terminal marchand référencé.

Le code à comparer peut par exemple avoir été généré par le PAD authentifié, lors de son référencement par exemple, ou dynamiquement, ou par une application exécutée sur le terminal marchand référencé.

Dans encore d'autres modes de réalisation, également éventuellement complémentaires, des informations complémentaires, relatives au PAD authentique référencé et facilement contrôlables, peuvent être fournies lors de l'étape 206. Il peut par exemple s'agir d'informations relatives au marchand enregistré pour le PAD authentique référencé (par exemple son nom, son activité, sa photographie) ou encore d'une localisation du PAD authentique référencé ou du terminal marchand référencé, lorsqu'ils sont munis de moyens permettant leur localisation par le serveur. Dans ce dernier cas, l'étape 208 de contrôle peut en particulier être effectuée automatiquement par l'application dédiée s'exécutant sur le téléphone 100, par comparaison d'une localisation du PAD authentique référencé ou du terminal marchand référencé avec une localisation du téléphone 100 par exemple.

### 6.3 Présentation d'un second mode particulier de réalisation de l'invention

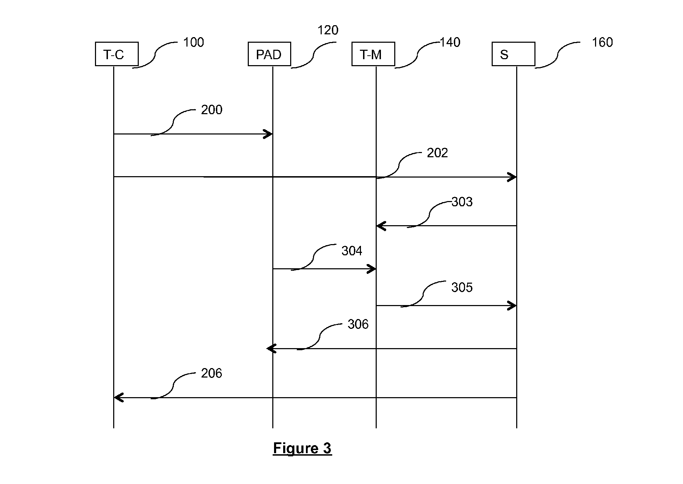

On présente à présent, en liaison avec la figure 3, un second mode de réalisation de l'invention.

Ce mode de réalisation diffère notamment du mode de réalisation illustré en figure 2 en ce que l'étape de vérification de l'association de l'identifiant du PAD à utiliser à un PAD authentique, comprend une étape 303 de lancement d'une transaction fictive à effectuer, utilisant le PAD à utiliser, pour permettre de vérifier l'intégrité de la chaîne complète de traitement.

Cette étape 303 de lancement peut être effectuée depuis le serveur d'authentification vers le terminal 100 du client ou, comme illustré en figure 3, vers le terminal 140 du tiers.

Dans ce dernier cas, l'étape de réception 202 pourra en particulier comprendre une sous-étape de réception, par le serveur d'authentification, de l'identifiant du téléphone 140 du tiers vers qui adresser l'ordre de lancement.

Dans un autre mode de réalisation, l'étape de lancement 303 peut être effectuée vers le terminal marchand référencé. L'absence de lancement permettra ainsi facilement à un utilisateur de se rendre compte que le PAD à utiliser n'est pas un PAD authentique.

La transaction fictive à effectuer peut par exemple comprendre la lecture par le PAD à utiliser d'une carte de test fournie au commerçant lors de l'achat du PAD ou fournie à l'utilisateur, par exemple lors de la souscription d'un abonnement à une application dédiée à la vérification de l'authenticité de PAD ou dans le cadre de la souscription de services bancaires en ligne sécurisés.

Ainsi, dans le mode de réalisation illustré en figure 3, les données lues par le PAD depuis une simple carte magnétique, utilisée comme carte de test, sont fournies lors de l'étape 304 au téléphone 140 du tiers puis reçues par le serveur (étape 305).

Le PAD peut notamment rester bloqué, empêchant ainsi toute autre transaction, à partir du lancement du test jusqu'à la réception d'un ordre de déblocage du serveur (étape 306).

Le procédé décrit ci-dessus est destiné à des PAD utilisés pour la lecture de cartes de paiement électroniques. Il est clair toutefois qu'il peut aisément être adapté à de nombreuses autres applications, sans sortir du cadre de l'invention, dès que la fiabilité du PAD est critique, par exemple des cartes électroniques établissant l'identité d'un individu.

Il est clair également que de nombreux autres modes de réalisation de l'invention peuvent être envisagés.

### 6.4 Structure d'un serveur d'authentification selon l'invention

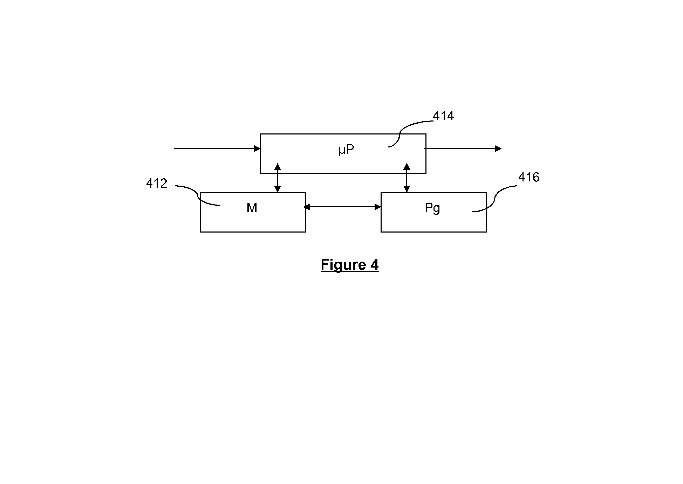

On présente, en relation avec la figure 4, la structure simplifiée d'un serveur d'authentification selon l'invention.

Un tel serveur comprend une mémoire 412 comprenant une mémoire tampon, une unité de traitement 414, équipée par exemple d'un microprocesseur µP, et pilotée par un programme d'ordinateur 416, dont l'exécution met en oeuvre un procédé de vérification d'authenticité, selon l'un des modes de réalisation particuliers de l'invention.

A l'initialisation, les instructions de code du programme d'ordinateur 416 sont par exemple chargées dans une mémoire RAM avant d'être exécutées par le processeur de l'unité de traitement 414.

L'unité de traitement 414 reçoit en entrée un entête d'un flux de données.

Le microprocesseur de l'unité de traitement 414 met en oeuvre les étapes du procédé de vérification d'authenticité décrit précédemment, selon les instructions du programme d'ordinateur 416.

A cette fin, le serveur d'authentification comprend, outre la mémoire tampon 412 :
- des moyens de réception d'un identifiant que comporte un périphérique d'acquisition de données à utiliser ;
- des moyens de vérification d'une association dudit identifiant avec un périphérique authentique référencé, délivrant une décision d'identification ;
- des moyens de transmission de ladite décision d'identification.

Ces moyens sont pilotés par le microprocesseur de l'unité de traitement 412.

Selon un mode de réalisation, l'invention est mise en oeuvre au moyen de composants logiciels et/ou matériels. Dans cette optique, le terme "moyens" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour les moyens concernés. Un tel composant logiciel est exécuté par un processeur de données d'une entité physique (terminal, serveur, passerelle, set-top-box, routeur, etc...) et est susceptible d'accéder aux ressources matérielles de cette entité physique (mémoires, supports d'enregistrement, bus de communication, cartes électroniques d'entrées/sorties, interfaces utilisateur, etc...).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

## Revendications

1. Procédé de vérification de l'authenticité d'un périphérique d'acquisition de données, à utiliser, ledit périphérique d'acquisition de données à utiliser comportant au moins un identifiant, ledit procédé comprenant :
- une étape de réception, par un serveur d'authentification, dudit identifiant ;
- une étape de vérification, par ledit serveur d'authentification, d'une association dudit identifiant avec un périphérique authentique référencé, délivrant une décision d'identification ;
- une étape de transmission, par ledit serveur, de ladite décision d'identification ;
ledit procédé étant **caractérisé en ce qu'il** comprend en outre une étape d'obtention, par ledit serveur d'authentification, d'au moins une information complémentaire issue dudit périphérique d'acquisition de données à utiliser, ladite information complémentaire étant représentative d'une absence d'altération et/ou d'effraction dudit périphérique d'acquisition de données à utiliser.

2. Procédé de vérification selon la revendication 1, **caractérisé en ce qu'il** comprend une étape de contrôle de l'authenticité dudit périphérique d'acquisition de données à utiliser, délivrant une décision d'authentification dudit périphérique d'acquisition de données à utiliser.

3. Procédé de vérification selon l'une quelconque des revendications 1 à 2, **caractérisé en ce qu'il** comprend en outre une étape d'acquisition, préalable à ladite étape de transmission, permettant d'acquérir au moins ledit identifiant.

4. Procédé de vérification selon la revendication 3, **caractérisé en ce que** ladite étape d'acquisition comprend une sous-étape appartenant au groupe comprenant :
- une lecture d'un code barre et/ou d'un flash code porté par ledit périphérique d'acquisition de données à utiliser et comprenant ledit identifiant ;
- une réception d'un flux de données par des moyens de communication sans fil, ledit flux de données comprenant ledit identifiant ;
- une lecture d'une étiquette RFID portée par ledit périphérique d'acquisition de données à utiliser et comprenant ledit identifiant ;
- une reconnaissance optique de caractères portés par ledit périphérique d'acquisition de données à utiliser et comprenant ledit identifiant.

5. Procédé de vérification selon l'une des revendications 3 ou 4, **caractérisé en ce que** ladite étape d'acquisition fournit en outre une information de désignation dudit serveur d' authentification.

6. Procédé de vérification selon l'une des revendications 1 à 5 **caractérisé en ce que** ladite étape de vérification comporte une sous-étape d'obtention d'une information de désignation d'un terminal de communication associé audit périphérique authentique référencé.

7. Procédé de vérification selon la revendication 2, **caractérisé en ce que** ladite étape de transmission de ladite décision d'identification comprend, préalablement à ladite étape de contrôle de l'authenticité dudit périphérique d'acquisition de données à utiliser, au moins une sous-étape appartenant au groupe comprenant :
- la transmission d'au moins une donnée à présenter sur ledit périphérique authentique référencé associé audit identifiant ;
- la transmission d'au moins une donnée à présenter sur au moins un terminal de communication ;
- le lancement d'une séquence de test depuis ledit périphérique authentique référencé associé audit identifiant ;
- une combinaison de plusieurs de ces sous-étapes.

8. Procédé de vérification selon l'une des revendications 1 à 7, **caractérisé en ce que** ledit identifiant est transmis depuis un terminal de communication et ladite décision d'identification est reçue par ledit terminal de communication.

9. Produit programme d'ordinateur, comprenant des instructions de code de programme pour la mise en oeuvre du procédé selon au moins une des revendications 1 à 8, lorsque ledit programme est exécuté sur un ordinateur.

10. Serveur d'authentification d'un périphérique d'acquisition de données, à utiliser, ledit périphérique comportant au moins un identifiant, ledit serveur comprenant :
- des moyens de réception dudit identifiant ;
- des moyens de vérification d'une association dudit identifiant avec un périphérique authentique référencé, délivrant une décision d'identification ;
- des moyens de transmission de ladite décision d'identification ;
ledit serveur étant **caractérisé en ce qu'il** comprend en outre des moyens d'obtention d'au moins une information complémentaire issue dudit périphérique d'acquisition de données à utiliser, ladite information complémentaire étant représentative d'une absence d'altération et/ou d'effraction dudit périphérique d'acquisition de données à utiliser.

11. Système de vérification de l'authenticité d'un périphérique d'acquisition de données, à utiliser, connecté à un premier terminal de communication, ledit périphérique comportant au moins un identifiant, et ledit système comprenant au moins un second terminal de communication, et un serveur d'authentification d'un périphérique selon la revendication 8, ledit système comprenant :
- des moyens de transmission dudit identifiant depuis ledit second terminal de communication vers ledit serveur ;
- des moyens de test d'une acquisition d'une séquence particulière de données depuis le périphérique authentifié utilisé par ledit premier terminal;
- des moyens de réception d'une décision d'identification dudit serveur, par ledit second
terminal ;
ledit système étant **caractérisé en ce qu'il** comprend en outre des moyens d'obtention, par ledit serveur d'authentification, d'au moins une information complémentaire issue dudit périphérique d'acquisition de données à utiliser, ladite information complémentaire étant représentative d'une absence d'altération et/ou d'effraction dudit périphérique d'acquisition de données à utiliser.
